(19) Europäisches Patentamt
European Patent Office
Office européen des brevets

(11) EP 3 237 515 B1

(12) **EUROPEAN PATENT SPECIFICATION**

(45) Date of publication and mention of the grant of the patent:
**03.10.2018 Bulletin 2018/40**

(21) Application number: **15828448.9**

(22) Date of filing: **28.12.2015**

(51) Int Cl.:
***C08K 3/36*** *(2006.01)* ***C08K 5/372*** *(2006.01)*
***C08K 5/548*** *(2006.01)* ***C08L 9/00*** *(2006.01)*
***C08L 9/06*** *(2006.01)*

(86) International application number:
**PCT/US2015/067698**

(87) International publication number:
**WO 2016/106418 (30.06.2016 Gazette 2016/26)**

(54) **REACTIVE SILICA IN EPOXIDIZED POLYBUTADIENE**

REAKTIVE KIESELSÄURE IN EPOXIDIERTEM POLYBUTADIEN

SILICE RÉACTIVE DANS DU POLYBUTADIÈNE ÉPOXYDÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.12.2014 US 201462096923 P**
**26.12.2014 US 201462096921 P**

(43) Date of publication of application:
**01.11.2017 Bulletin 2017/44**

(73) Proprietor: **Compagnie Générale des Etablissements Michelin**
**63000 Clermont-Ferrand (FR)**

(72) Inventors:
- **MCDOWELL, Jessica**
  **Greenville, SC 29605 (US)**
- **PAPPAS, Christopher**
  **Greenville, SC 29605 (US)**
- **SAINTIGNY, Xavier**
  **Greenville, SC 29605 (US)**
- **VASSEUR, Didler**
  **Greenville, SC 20605 (US)**

(74) Representative: **Casalonga**
**Casalonga & Partners**
**Bayerstraße 71/73**
**80335 München (DE)**

(56) References cited:
**EP-A1- 2 105 462 US-A1- 2012 041 098**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### BACKGROUND OF THE INVENTION

### Field of the Invention

This invention relates generally to rubber compositions and more particularly, to rubber compositions useful for making articles such as tires or semi-finished products for tires.

### Description of the Related Art

Tire designers must often deal with conflicting requirements when they design a new tread for a tire. Tire consumers want to have tires that grip well in the snow as well as on dry and wet roads, they want low rolling resistance tires that require tires be designed with low hysteresis and they want tires with good wear properties so they can run the tires for many miles without wearing them out.

Improving grip and wear at the same time remains a constant challenge to the tire designer. It is well known in the industry that tire designers often compromise on certain tire performance characteristics since often each improvement to one characteristic is offset by a decline in another tire performance characteristic. Such is the case for tire wear and wet traction. There is a compromise that tire designers must reach since when they try to achieve an improvement in the wear properties of the tire there is often a decrease in the braking performance of the tire. Therefore, tire designers are looking for improvements to their designs that allow them to break this compromise, *i.e.,* achieve an improvement in wear without a corresponding decrease in another tire property such as braking.

Sometimes the improvements to the physical properties of rubber compositions can be obtained by improving the incorporation of components in the mix. As is known, mixing the rubber components in a rubber composition can be difficult due to the interaction of the components during the mixing process. Therefore designers are looking for improvements to the rubber compositions that can be achieved by changing the mixing process or the ingredients the rubber composition that will improve the dispersion of the material in the rubber composition.

### SUMMARY OF THE INVENTION

Particular embodiment so of the disclosure include rubber compositions and articles made from rubber compositions. Embodiments include rubber compositions that are based upon a cross-linkable elastomer composition comprising, per 100 parts by weight of rubber (phr), between 70 phr and 100 phr of an epoxidized rubber component selected from an epoxidized polybutadiene rubber (eBR), an epoxidized styrene-butadiene rubber (eSBR), or combinations thereof, wherein the epoxidized rubber component has a Tg of between -80 °C and -110 °C and an epoxy-function content of between 1 mol% and 25 mol%.

Such rubber compositions may further include between 30 phr and 150 phr of a plasticizing resin and a quickly reactive silica that provides a macro dispersion Z-value of at least 50 in a defined rubber composition and a non-silol coupling agent corresponding to

$$Z\text{-}A\text{-}S_x\text{-}A\text{-}Z$$

wherein x is an integer between 2 and 8, A is a divalent hydrocarbon radical and Z corresponds to one of the following:

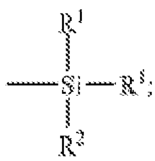 ; 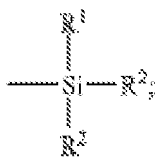 ; 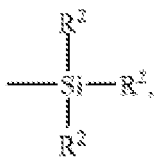 ,

wherein $R^1$ radicals are the same or different and are a $C_1$-$C_{18}$ alkyl, $C_5$-$C_{18}$ cycloalkyl or $C_6$-$C_{18}$ aryl group, $R^2$ radicals are the same or different and are $C_1$-$C_{18}$ alkoxyl or $C_5$-$C_{18}$ cycloalkoxyl group and wherein $R^2$ radicals are not a hydroxyl radical.

### BRIEF DESCRIPTION OF THE DRAWINGS

FIGS. 1A-1B are photomicrographs of exemplary rubber mixtures showing the improved silica dispersion when

using a quickly reactive silica.

DETAILED DESCRIPTION OF PARTICULAR EMBODIMENTS

Particular embodiments of the present invention include treads and tires having such treads that have improved wear characteristics while maintaining or even improving their traction, *i.e.,* improved braking performance, especially wet traction. This improvement in wear and traction has been achieved by forming unique tire treads from a silica reinforced rubber composition that includes a rubber component having a low glass transition temperature (Tg), a plasticizing resin and a quickly reactive silica. The plasticizing resin is added to adjust the Tg of the rubber composition to be within a range suitable for all-weather tires, summer tires and/or winter tires. The quickly reactive silica vastly improves the processability of the rubber composition as well as the dispersion of the silica in the rubber composition and further provides improvement in the physical characteristics of the rubber composition, especially related to cohesive properties.

Such tires are particularly suitable for use on passenger cars and/or light trucks and while certain embodiments are limited to such uses, other embodiments are broader and may include tires useful for other vehicles including heavy trucks, aircraft and so forth.

As used herein, "phr" is "parts per hundred parts of rubber by weight" and is a common measurement in the art wherein components of a rubber composition are measured relative to the total weight of rubber in the composition, *i.e.,* parts by weight of the component per 100 parts by weight of the total rubber(s) in the composition.

As used herein, elastomer and rubber are synonymous terms.

As used herein, "based upon" is a term recognizing that embodiments of the present invention are made of vulcanized or cured rubber compositions that were, at the time of their assembly, uncured. The cured rubber composition is therefore "based upon" the uncured rubber composition. In other words, the cross-linked rubber composition is based upon or comprises the constituents of the cross-linkable rubber composition.

As is generally known, a tire tread includes the road-contacting portion of a vehicle tire that extends circumferentially about the tire. It is designed to provide the handling characteristics required by the vehicle; *e.g.,* traction, dry braking, wet braking, cornering and so forth - all preferably being provided with a minimum amount of generated noise and at low rolling resistance.

Treads of the type disclosed herein include tread elements, the structural features of the tread that contact the ground. Such structural features may be of any type or shape, examples of which include tread blocks and tread ribs. Tread blocks have a perimeter defined by one or more grooves that create an isolated structure in the tread while a rib runs substantially in the longitudinal (circumferential) direction and is not interrupted by grooves that run in the substantially lateral (axial) direction or any other grooves that are oblique thereto. The radial (depth) direction is perpendicular to the lateral direction.

It is recognized that treads may be formed from only one rubber composition or in two or more layers of differing rubber compositions, *e.g.,* a cap and base construction. In a cap and base construction, the cap portion of the tread is made of one rubber composition that is designed for contract with the road. The cap is supported on the base portion of the tread, the base portion made of different rubber composition. In particular embodiments of the present invention the entire tread may be made from the rubber compositions disclosed herein while in other embodiments only the cap portions of the tread may be made from such rubber compositions.

In other embodiments it is recognized that the contact surface of the tread elements, *i.e.,* that portion of the tread element that contacts the road, may be formed totally and/or only partially from the rubber compositions disclosed herein. In particular embodiments the tread block, for example, may be formed as a composite of laterally layered rubber compositions such that at least one lateral layer of a tread block is of the rubber compositions disclosed herein and another lateral layer of a tread block is of an alternative rubber composition. In particular embodiments of tread constructions, at least 80 % of the total contact surface area of the tread is formed solely from the rubber compositions disclosed herein. The total contact surface area of the tread is the total surface area of all the radially outermost faces of the tread elements that are adapted for making contact with the road.

Particular embodiments of the rubber compositions that are disclosed herein and that are useful for treads include an epoxidized rubber component that is selected from an epoxidized polybutadiene rubber (eBR), an epoxidized styrene-butadiene rubber (eSBR) or combinations thereof. These useful rubbers may be further characterized as having a low glass transition temperature (Tg), *i.e.,* a Tg of between -80 °C and -110 °C or alternatively between -80 °C and -105 °C, between -85 °C and -105 °C or between -90 °C and -100 °C. The glass transition temperatures of epoxidized elastomers may be measured by differential scanning calorimetry (DSC) in accordance with ASTM D3418.

Epoxidized rubbers such as eBR and eSBR are well known and may be obtained, as is known to those skilled in the art, by processes based on chlorohydrin or bromohydrin or processes based on hydrogen peroxides, alkyl hydroperoxides or peracids (such as peracetic acid or performic acid).

To obtain the targeted technical effect, the epoxidized rubber includes between 1 mol% and 25 mol% of the

epoxy functionality or alternatively between 2 mol% and 25 mol%, between 2 mol% and 18 mol%, between 5 mol% and 25 mol%, between 5 mol% and 18 mol%, between 8 mol% and 15 mol% or between 8 mol% and 20 mol%. Since the Tg of the rubber increases with increasing epoxy functionality, greater than 25 mol% impacts the desired wear properties of the treads disclosed herein and less than the 1 mol% impacts the resin selection and content of the resulting rubber composition. The epoxy functionality by mole percent can be determined in known way through NMR analysis as described below.

eSBR is a copolymer of styrene and butadiene that has been functionalized with an epoxy functional group as explained above. The SBR may be manufactured by any of the known processes including the emulsion process producing E-SBR and the solution process producing S-SBR.

The microstructure of the eSBR is typically described in terms of the amount of bound styrene and the form of the butadiene portion of the polymer. Looking first at the amount of bound styrene, since the Tg of the eSBR increases as the bound styrene content increases it is necessary to limit the amount of bound styrene to an amount that still provides the required low Tg of the elastomer. Particular embodiments of the present invention may utilize an SBR having a bound styrene content, for example, of between 3 wt% and 30 wt% or alternatively between 3 wt% and 25 wt% or between 5 wt% and 20 wt% bound styrene.

Considering the butadiene portion of the copolymer, the butadiene portion is made up of three forms because of the double bond present in that butadiene portion. The three forms are the *cis*-1,4, *trans*-1, 4 and *vinyl*-1,2 forms. Higher levels of the *cis*-form may typically provide a lower Tg while increasing levels of the *vinyl*-form may typically increase the Tg. SBR materials suitable for use as the low Tg SBR may be described, for example, as having a *vinyl*-1,2-bond content of between 4 mol% and 30 mol% or alternatively, between 4 mol% and 25 mol% or between 4 mol% and 20 mol%.

Of course it is a balancing of the styrene content and the microstructure of the butadiene portion of the eSBR that provides the physical properties desired of the material, including the low Tg. While the microstructure and styrene content of the eSBR can be adjusted to provide improvements to the properties of the elastomer, the invention requires that the low Tg eSBR elastomers that are included in the suitable rubber compositions disclosed herein fall reasonably within the claimed glass transition range.

eBR is a homopolymer of butadiene units that have polymerized and that has then been functionalized with an epoxy functional group as explained above. As in the case of the butadiene portion of the eSBR, the eBR Tg decreases with increased levels of the *cis*-form microstructure and increases with increased levels of the *vinyl*-form. In particular embodiments, for example, the *cis*-form content of the eBR is in excess of 50 mol%. While the microstructure of the eBR can be adjusted to provide improvements to the properties of the elastomer, the invention requires that the low Tg eBR elastomers that are included in the suitable rubber compositions disclosed herein fall within the claimed glass transition range.

Particular embodiments of the suitable rubber compositions useful for tire treads disclosed herein include between 70 phr and 100 phr of the low Tg epoxidized rubber component. Alternatively the rubber compositions may include between 80 phr and 100 phr of the low Tg epoxidized rubber component, between 85 phr and 100 phr, between 90 phr and 100 phr or greater than 90 phr of the rubber component. Particular embodiments may include less than 100 phr of the low Tg epoxidized rubber component such as between 80 phr and 95 phr, between 85 phr and 95 phr or between 90 phr and 95 phr. Particular embodiments include 100 phr of the low Tg epoxidized rubber component.

Particular embodiments of the suitable rubber compositions disclosed herein may include as the low Tg epoxidized rubber component only eBR, only eSBR or combinations of both eBR and SBR in any ratio. In those embodiments that include both eBR and eSBR, some embodiments may be limited to including eBR in a majority amount or alternatively in amount greater than 60 % of the total phr of the eBR and the SBR in the rubber composition or at least 75 % or at least 90 % of such total phr.

In addition to the low Tg epoxidized eBR and/or eSBR, particular embodiments of the rubber compositions disclosed herein may include one or more additional diene rubber components. Such diene elastomers are understood to be those elastomers resulting at least in part, *i.e.,* a homopolymer or a copolymer, from diene monomers, *i.e.,* monomers having two double carbon-carbon bonds, whether conjugated or not.

While particular embodiments of the rubber compositions disclosed herein include only the low Tg epoxidized rubber components discussed above, others may additionally include such diene elastomers capped at an amount of no more than 30 phr or alternatively, no more than 25 phr, no more than 20 phr, no more than 10 phr or no more than 5 phr of such additional diene elastomers. Particular embodiments of such rubber compositions may include a lower limit for each of these caps of 0 phr and others may include a lower limit of 5 phr of such additional diene elastomers.

These additional diene elastomers may be classified as either "essentially unsaturated" diene elastomers or "essentially saturated" diene elastomers. As used herein, essentially unsaturated diene elastomers are diene elastomers resulting at least in part from conjugated diene monomers, the essentially unsaturated diene elastomers having a content of such members or units of diene origin (conjugated dienes) that is at least 15 mol. %. Within the category of essentially unsaturated diene elastomers are highly unsaturated diene elastomers, which are diene elastomers having a content

of units of diene origin (conjugated diene) that is greater than 50 mol. %.

Those diene elastomers that do not fall into the definition of being essentially unsaturated are, therefore, the essentially saturated diene elastomers. Such elastomers include, for example, butyl rubbers and copolymers of dienes and of alpha-olefins of the EPDM type. These diene elastomers have low or very low content of units of diene origin (conjugated dienes), such content being less than 15 mol. %. Particular embodiments of the present invention exclude any additional diene elastomers that are essentially saturated.

Suitable elastomers that may be included as additional elastomers in the rubber compositions disclosed herein in addition to the eBR and eSBR include, for example, one or more highly unsaturated elastomers such as polybutadienes (BR), polyisoprenes (IR), natural rubber (NR), butadiene copolymers, isoprene copolymers and mixtures of these elastomers. Such copolymers include, for example, butadiene/styrene copolymers (SBR), isoprene/butadiene copolymers (BIR), isoprene/styrene copolymers (SIR) and isoprene/butadiene/styrene copolymers (SBIR). Particular embodiments of the present invention are limited only to highly unsaturated diene elastomers as useful additional elastomers.

In addition to the elastomers described above, particular embodiments of the present invention include a plasticizing resin and in particular embodiments the resin is an efficient plasticizing resin. An efficient plasticizing resin is one that when mixed in an amount of 67 phr with just the low Tg epoxidized rubber component, results in a mixture having a Tg that is at least 14 °C higher than the Tg of the epoxidized rubber component. Such plasticizing resins are typically compatible with the rubber composition; that is, they are miscible with the rubber composition. If the plasticizing resin is not compatible, then a determination of the Tg using DSC in accordance with ASTM D3418 will have Tg peaks representing the rubber blend as well as the resin itself. If the resin is compatible, then there will be but one peak for the rubber composition.

Table **1** demonstrates how some plasticizing resins are efficient plasticizing resins for some levels of epoxy functionality but not at others. Some are not efficient plasticizing resins with BR having no epoxy functionality but become efficient with at least some of the epoxy functionality levels.

Table **1** - Change in Tg of BR at Various Epoxy Functionality Levels

| Plasticizer | | | Change in Tg of BR Mixture with 67 phr of Plasticizer, °C | | | |
|---|---|---|---|---|---|---|
| Name | Type | Tg, °C | 0 mol% X | 5 mol% X | 12.5 mol% X | 20 mol % X |
| BPH | antioxidant | 16 | | | 18 | 21 |
| C30 | Coumarone- Indene | -16 | | | 19 | |
| Colophane | Pine rosin | 52 | | 12 | 19 | |
| Dertophene 1510 | Terpene Phenolic | 108 | | 23 | 31 | |
| Dertophene H150 | Terpene Phenolic | 74 | 4 | 16 | 38 | 34 |
| Dertophene T115 | Terpene Phenolic | 74 | | 16 | 18 | |
| Dertophene T135 | Terpene Phenolic | 85 | | | 23 | |
| Escorez 5690 | Cycloaliphatic | 38 | 14 | | | |
| Oppera | Hydrocarbon Resin | 44 | 12 | | 14 | 3 |
| Resin-OPFT | Octylphenol formaldehyde | 52 | | 9 | 17 | |
| Sylvares 600 | AMS phenolic | 47 | | | 20 | |
| Sylvares TP2019 | Terpene Phenolic | 74 | 12 | 19 | 17 | |
| Sylvares TP2040 | Terpene Phenolic | 74 | 4 | 15 | 36 | 36 |
| Sylvares TP300 | Terpene Phenolic | 68 | | | 35 | 32 |
| Sylvatac RE40 | Terpene Phenolic | -5 | | 10 | 15 | |
| Uni-Rez TP115 | polyamide | 64 | | 14 | 20 | |

For example, as may be seen in Table 1, the Oppera plasticizer (modified aliphatic hydrocarbon resin available from ExxonMobil) is demonstrated as an efficient resin only when mixed with the BR having 12.5 mol% epoxy functionality and not with the non-functionalized BR nor with the 20 mol% functionalization. BPH is the well-known antioxidant 2,2'-methylene-bis(4-methyl-6-tert-butyl)-phenol and is a useful efficient plasticizing resin at least for the BR having the 12.5 mol% epoxy functionality.

Other useful efficient plasticizing resins include the SYLVARES 600 resin ($M_n$ 850 g/mol; Ip 1.4; $T_g$ 47° C.; HN of 31 mg KOH/g) that is an octyl phenol-modified copolymer of styrene and alpha methyl styrene as well as the coumarone-indene resins.

As may be noted, the terpene phenolic resins are especially useful as a class for providing efficient plasticizing resins. Terpene phenolic resins are well known and are produced by the copolymerization of terpene monomers and phenol. As is known, terpene monomers include alpha-pinene, beta-pinene and limonene monomers, with the limonene monomers existing in three possible isomers: L-limonene (laevorotatory enantiomer), D limonene (dextrorotatory enantiomer) or else dipentene, the racemate of the dextrorotatory and laevorotatory enantiomers. Useful terpene phenolic resins may be those that include the copolymerization of the monomers selected from alpha-pinene, beta-pinene, limonene monomers or combinations thereof with phenol. These types of resins are sometimes known as phenol modified terpene resins.

The degree of polarity of the terpene phenolic resins is determined by the number of hydroxyl groups contained within the resin. The higher the hydroxyl content, the greater the polarity of the terpene phenolic resin. The hydroxyl number (HN) of the resin is the amount, in milligrams, of potassium hydroxide equivalent to the hydroxyl groups in a 1 g sample of the resin and is, therefore, a measure of the concentration of hydroxyl groups in the resin. It is determined in known manner in accordance with ASTM E222. Particular embodiments have resins having a hydroxyl number that is at least 30 mg KOH/g or alternatively at least 50 mg KOH/g.

Terpene phenolic resins are available on the market from, for example, Arizona Chemical having offices in Savannah, GA. Arizona Chemical markets a range of terpene phenolic resins under the name SYLVARES with varying softening points (SP), glass transition temperatures (Tg) hydroxyl numbers (HN), number-average molecular masses (Mn) and polydispersity indices (Ip), examples of which include: SYLVARES TP105 (SP: 105 °C; Tg: 55 °C; HN: 40; Mn: 540; Ip:1.5); SYLVARES TP115 (SP: 115 °C; Tg: 55 °C; HN: 50; Mn: 530; Ip:1.3); and SYLVARES TP2040 (SP: 125 °C; Tg: 80 °C; HN: 135-150; Mn: 600; Ip:1.3).

Particular embodiments of the useful rubber compositions disclosed herein may include between 30 phr and 150 phr or between 40 phr and 150 phr of the efficient plasticizing resin or alternatively between 50 phr and 150 phr or between 60 phr and 100 phr of the resin. In particular embodiments the amount of efficient plasticizing resin that is added is an amount that adjusts the glass transition temperature of the final rubber composition to between -35 °C and 0 °C as may be desired for the a tread designed for a particular season. For example the efficient resin may be added in an amount sufficient to adjust the Tg of the rubber compositions around the broad range mentioned above to provide a Tg of between -35 °C and -25 °C for winter tires, between -30 °C and -17 °C for all-season tires and between -17 °C and 0 °C for summer tires.

It is recognized that in some rubber compositions that include the eBR and/or the eSBR, the amount of the efficient resin added to the rubber composition may result in the Tg of the rubber composition being higher than the target for the particular use. Therefore, in particular embodiments, an additional plasticizer other than an efficient plasticizing resin may be used to lower the Tg to the target or to adjust another performance characteristic for the tread to be formed from the rubber composition. Such plasticizers may include other resins or may include a plasticizing oil as are well known to those having ordinary skill in the art. Such additional plasticizer may be added in an amount of between 0 phr and 40 phr or alternatively between 1 phr and 30 phr or between 5 phr and 15 phr.

In addition to the elastomers, the efficient plasticizing resins and other plasticizers disclosed above, particular embodiments of the rubber compositions that are useful for treads disclosed herein may further include a reinforcing filler. Reinforcing fillers are added to rubber compositions to, *inter alia,* improve their tensile strength and wear resistance. Typically it is recognized that there are many suitable silicas that can be used in rubber compositions and they are often employed as such by those skilled in the art. Such reinforcing fillers include, for example, carbon blacks and/or inorganic reinforcing fillers such as silica, with which a coupling agent is typically associated. However, for particular embodiments of the compositions disclosed herein, the compositions include quickly reactive silica reinforcement fillers as further discussed and defined below.

As used herein, quickly reactive silica reinforcement fillers are those that disperse adequately in the rubber compositions that include the epoxidized rubber components without the use of a silol coupling agent. As has been disclosed previously in US provisional application 62/096923 filed December 26, 2014 the use of a particular silol coupling agent, an example of which is bis(3-hydroxydimethylsilyl)propyl tetrasulfide, provided the surprising results of improved dispersion when using more typical silicas. What has been discovered here is that the special coupling agents disclosed therein are not required if the silica used is a quickly reactive silica.

Therefore, particular embodiments of the rubber compositions disclosed herein are limited to quickly reactive

silicas. These quickly reactive silicas improve the mixing and physical properties of the resultant mix even when using a silane coupling agent such as bis-(triethoxysilylpropyl) tetrasulfide, abbreviated as TESPT, which is a well-known coupling agent used in rubber compositions that include silica.

An example of a quickly reactive silica is ULTRASIL 7000 that is available from Evonik with offices in Essen Germany. ULTRASIL 7000 is a silica having a BET surface area of 160 $m^2/g$ as determined by ASTM 5604.

It has been determined that not all silicas can be mixed well with epoxidized BR or epoxidized SBR with the result being poor physical properties of the resulting rubber composition. Surprisingly it has been discovered that silicas that react quickly with the coupling agent, *i.e.,* are quickly reactive silicas, provide improved rubber compositions when using a standard coupling agent, such as TESPT.

To determine whether the silica is a quickly reactive silica, 100 phr of the silica is mixed in an epoxidized rubber composition having 100 phr of epoxidized SBR or epoxidized BR with 12% epoxidation and sufficient terpene phenol resin plasticizer to provide defined rubber composition having a glass transition temperature of the cured defined rubber composition of between -10 ° C and 0 ° C. Then the dispersion of the silica in the cured defined rubber composition is measured to determine its macro dispersion Z-value using the method based on ISO Standard 11345 described below. If the macro dispersion Z-value is at least 50, or alternatively at least 60, at least 65 or at least 70, then the silica is a quickly reactive silica.

The macro dispersion Z-value is measured, after cross-linking, using a method consistent with ISO standard 11345 and as described by S. Otto in Kautschuk Bummi Kunststoffe, 58 Jahrgang, NR 7-8/2005. The macro dispersion Z-value calculation is based on the percentage of surface area in which the filler is not dispersed ("non-dispersed % area") as measured by the "disperGRADER", a device available from Alpha Technologies of Akron, Ohio with its associated software and designed to measure the dispersion of filler in accordance with ISO standard 11345. The macro dispersion Z-value is determined using the equation:

$$Z=100-(\text{non-dispersed \% area})/0.35$$

The non-dispersed percentage area is itself measured using a camera that looks at the surface of the specimen under light incident at an angle of 30 degrees. Light-colored points are associated with filler and agglomerations, while dark points are associated with the rubber matrix; a digital processing operation converts the image into a black-and-white image and allows the percentage of non-dispersed area to be determined, in the way described by S. Otto in the abovementioned document.

In particular embodiments, the quickly reactive silica may be limited to those having a BET surface area of between 140 $m^2/g$ and 180 $m^2/g$ as determined by ASTM 5604 or alternatively between 150 $m^2/g$ and 170 $m^2/g$.

In particular embodiments, the amount of total reinforcing filler may include any suitable amount for the given application, examples of which are between 40 phr and 180 phr or alternatively between 50 phr and 150 phr, between 50 phr and 130 phr, between 50 phr and 110 phr or between 60 phr and 120 phr of reinforcing filler.

It should be noted that particular embodiments of the rubber compositions disclosed herein may include no carbon black or alternatively, very little carbon black such as, for example, between 0.5 phr and 15 phr of carbon black or between 0.5 phr and 10 phr of carbon black. Carbon black in typically added at these low levels to provide the black color to the rubber compositions.

In addition to the elastomers and the reinforcement fillers disclosed above, for those embodiments having silica as the reinforcement filler, a coupling agent is necessary. The coupling agent selected may be dependent on the type of silica selected as the reinforcement filler. As noted above, a silol coupling agent is useful when using a silica in an epoxidized rubber composition as disclosed herein. However such a coupling agent is not necessary if the silica is a quickly reactive silica.

For those embodiments that include the quickly reactive silica reinforcing filler, a coupling agent that is at least bifunctional provides a sufficient chemical and/or physical connection between the inorganic reinforcement filler and the diene elastomer. Examples of such coupling agents include bifunctional organosilanes or polyorganosiloxanes. Particular embodiments of the rubber compositions disclosed herein having the quickly reactive silica include a coupling agent corresponding to the following general formula (I):

$$Z\text{-}A\text{-}S_x\text{-}A\text{-}Z$$

in which x is an integer between 2 and 8, alternatively between 2 and 5; in which A, which may be identical or different, represents a divalent hydrocarbon radical, such as a $C_1$-$C_{18}$ alkylene group or a $C_6$-$C_{10}$ arylene group or alternatively a $C_1$-$C_{10}$ or $C_1$-$C_4$ alkylene, such as propylene; and in which Z, which may be identical or different, correspond to one of the following three formulas:

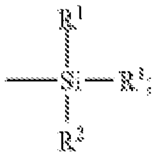 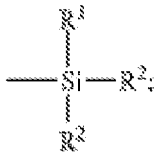 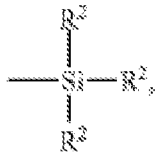

in which the $R^1$ radicals, which are substituted or unsubstituted and identical to or different from one another, represent a $C_1$-$C_{18}$ alkyl, $C_5$-$C_{18}$ cycloalkyl or $C_6$-$C_{18}$ aryl group (such as $C_1$-$C_6$ alkyl, cyclohexyl or phenyl groups, in particular $C_1$-$C_4$ alkyl groups, more particularly methyl and/or ethyl); in which the $R^2$ radicals, which are substituted or unsubstituted and identical to or different from one another, represent a $C_1$-$C_{18}$ alkoxyl or $C_5$-$C_{18}$ cycloalkoxyl group (such as a group selected from $C_1$-$C_8$ alkoxyls and $C_5$-$C_8$ cycloalkoxyls, or alternatively a group selected from $C_1$-$C_4$ alkoxyls, in particular methoxyl and ethoxyl) but in particular embodiments wherein the silica is a quickly reactive silica, then $R^2$ is not a hydroxyl radical (OH).

In the case of a mixture of alkoxysilane polysulfides corresponding to the above formula (I), in particular normal commercially available mixtures, the mean value of the "x" indices is a fractional number that may be typically between 2 and 5 or approximately 4. The disclosed compositions herein are not so limited and useful compositions may include such alkoxysilane disulfides wherein x is 2.

Silane polysulfide coupling agents as described above and their use are well known in the art. The coupling agent may optionally be grafted beforehand onto the diene elastomer or onto the inorganic reinforcing filler as is known. Otherwise it may be mixed into the rubber composition in its free or non-grafted state. One useful coupling agent is X50-S, a 50-50 blend by weight of Si69 (the active ingredient, bis-(triethoxysilylpropyl) tetrasulfide, abbreviated to TESPT) and N330 carbon black, available from Evonik. Another useful example of silane polysulfides useful as coupling agents include bis-(triethoxysilylpropyl) disulfide, abbreviated to TESPD.

Other more general examples include bis(($C_1$-$C_4$)alkoxyl($C_1$-$C_4$)alkylsilyl($C_1$-$C_4$)alkyl)polysulfides (in particular disulfides, trisulfides or tetrasulfides), such as, for example, bis(3-trimethoxysilylpropyl) or bis(3-triethoxysilylpropyl)polysulfides. Mention will also be made of bis(mono($C_1$-$C_4$)alkoxyldi($C_1$-$C_4$)alkylsilylpropyl)polysulfides (in particular disulfides, trisulfides or tetrasulfides), more particularly bis(monoethoxydimethylsilylpropyl)-tetrasulfide, such as described in U.S. Pat. No. 7,217,751).

For those rubber compositions using coupling agents such as TESPT or TESPD or similar types, the coupling agent may be included at any suitable amount for the given application, examples of which are between 2 phr and 20 phr or alternatively, between 2 phr and 15 phr or between 4 phr and 12 phr. It is generally desirable to minimize its use. In particular embodiments, the amount of coupling agent may represent between 0.5 wt% and 15 wt% relative to the total weight of the silica filler. In the case for example of tire treads for passenger vehicles, the coupling agent may be less than 12 wt% or even less than 8 wt% relative to the total weight of the silica filler.

As was mentioned before, if the silica used in the rubber composition is not a quickly reactive silicas, then the silica coupling agent may be limited to a monohydroxysilane polysulfide silica coupling agent having the form

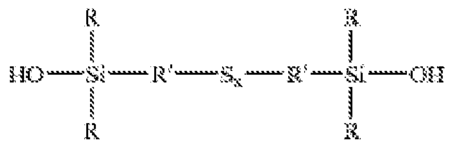

wherein radicals R, identical or different, are hydrocarbon groups, radicals R', identical or different, are divalent linking groups and x is equal to or greater than 2. It has been found that using this coupling agent provides improved processability of the rubber composition as well as improved dispersion of the silica in the rubber composition, cohesiveness properties and improved wear.

This coupling agent is known and its various forms and methods of making are fully disclosed in US Patent 6,774,255, which is fully incorporated herein by reference. In particular embodiments the useful coupling agent may include the radical R as having between 1 and 15 carbon atoms and/or the radical R' having between 1 and 18 carbon atoms. More particularly certain embodiments may provide that the radical R be selected, for example, from among $C_1$-$C_6$ alkyls, $C_5$-$C_8$ cycloalkyls and the phenyl radical and/or the radical R' be selected, for example, from among $C_1$-$C_{18}$ alkylenes and $C_6$-$C_{12}$ arylenes. As is known, alkyl groups are of the general formula $C_nH_{2n+1}$ while alkylene groups may be derived from an alkyl group by removal of two hydrogen atoms from different carbon atoms and arylenes may be derived from an aromatic hydrocarbon by removal of two hydrogen atoms from different carbon atoms.

In particular embodiments, the radicals R may be selected from $C_1$-$C_3$ alkyls and the radicals R' are selected from $C_1$-$C_4$ alkylenes. In particular embodiments x may be between 2 and 9 or alternatively between 2 and 4. Examples

of useful coupling agents include from bis(3-hydroxydimethylsilyl)propyl tetrasulfide, bis(3-hydroxydimethylsilyl)propyl disulfide, bis(2-hydroxy-dimethylsilyl)ethyl tetrasulfide, bis(2-hydroxydimethylsilyl)ethyl disulfide. Useful coupling agents may be used singly or in combination with others. Particular embodiments may limit the useful coupling agent to bis(3-hydroxydimethylsilyl)propyl tetrasulfide.

The epoxidized rubber compositions disclosed herein are difficult to process and surprising the monohydroxysilane polysulfide silica coupling agent used with the non-quickly reactive silicas and the coupling agents that include bifunctional organosilanes or polyorganosiloxanes used with the quickly reactive silicas vastly improves the processability of the rubber compositions. This improved processability provides improved dispersion of the fillers in the rubber composition and provide improved physical characteristics of the rubber compositions.

FIGS. 1A-1B are photomicrographs of exemplary rubber mixtures showing the improved silica dispersion when using a quickly reactive silica. FIG. 1A illustrates that the silica is not as well dispersed throughout the rubber mixture as it is in FIG. 1B that includes a quickly reactive silica. The use of the quickly reactive silica greatly improves the dispersion of the silica throughout the rubber composition.

The coupling agent may be included at any suitable amount for a given application, examples of which are between 2 phr and 16 phr or alternatively between 3 phr and 15 phr, between 3 phr and 12 phr or between 3 phr and 10 phr. In particular embodiments the amount of the silica coupling agent may be between 0.5 wt% and 14 wt% of relative to the total weight of the silica filler or alternatively between 2 wt% and 10 wt% or between 4 wt% and 8 wt%.

The rubber compositions disclosed herein may be cured with any suitable curing system including a peroxide curing system or a sulfur curing system. Particular embodiments are cured with a sulfur curing system that includes free sulfur and may further include, for example, one or more of accelerators, stearic acid and zinc oxide. Suitable free sulfur includes, for example, pulverized sulfur, rubber maker's sulfur, commercial sulfur, and insoluble sulfur. The amount of free sulfur included in the rubber composition is not limited and may range, for example, between 0.4 phr and 10 phr or alternatively between 0.4 phr and 5 phr or between 0.5 phr and 2 phr. Particular embodiments may include no free sulfur added in the curing system but instead include sulfur donors.

Accelerators are used to control the time and/or temperature required for vulcanization and to improve the properties of the cured rubber composition. Particular embodiments of the present invention include one or more accelerators. One example of a suitable primary accelerator useful in the present invention is a sulfenamide. Examples of suitable sulfenamide accelerators include n-cyclohexyl -2-benzothiazole sulfenamide (CBS), N-tert-butyl-2-benzothiazole Sulfenamide (TBBS), N-Oxydiethyl-2-benzthiazolsulfenamid (MBS) and N'-dicyclohexyl-2-benzothiazolesulfenamide (DCBS). Combinations of accelerators are often useful to improve the properties of the cured rubber composition and the particular embodiments include the addition of secondary accelerators.

Particular embodiments may include as a secondary accelerant the use of a moderately fast accelerator such as, for example, diphenylguanidine (DPG), triphenyl guanidine (TPG), diorthotolyl guanidine (DOTG), o-tolylbigaunide (OTBG) or hexamethylene tetramine (HMTA).

Without limiting the invention, such accelerators may be added in an amount of up to 10 phr, between 0.5 and 5 phr, between 02.5 and 1 phr or between 1 and 4.5 phr. Particular embodiments may exclude the use of fast accelerators and/or ultra-fast accelerators such as, for example, the fast accelerators: disulfides and benzothiazoles; and the ultra-accelerators: thiurams, xanthates, dithiocarbamates and dithiophosphates.

Other additives can be added to the rubber compositions disclosed herein as known in the art. Such additives may include, for example, some or all of the following: antidegradants, antioxidants, fatty acids, waxes, stearic acid and zinc oxide. Examples of antidegradants and antioxidants include 6PPD, 77PD, IPPD and TMQ and may be added to rubber compositions in an amount, for example, of from 0.5 phr and 5 phr. Zinc oxide may be added in an amount, for example, of between 1 phr and 6 phr or alternatively, of between 1.5 phr and 4 phr. Waxes may be added in an amount, for example, of between 0.5 phr and 5 phr.

The rubber compositions that are embodiments of the present invention may be produced in suitable mixers, in a manner known to those having ordinary skill in the art, typically using two successive preparation phases, a first phase of thermo-mechanical working at high temperature, followed by a second phase of mechanical working at lower temperature.

The first phase of thermo-mechanical working (sometimes referred to as "non-productive" phase) is intended to mix thoroughly, by kneading, the various ingredients of the composition, with the exception of the vulcanization system. It is carried out in a suitable kneading device, such as an internal mixer or an extruder, until, under the action of the mechanical working and the high shearing imposed on the mixture, a maximum temperature generally between 110° C and 190° C, more narrowly between 130° C and 170° C, is reached.

After cooling of the mixture, a second phase of mechanical working is implemented at a lower temperature. Sometimes referred to as "productive" phase, this finishing phase consists of incorporating by mixing the vulcanization (or cross-linking) system (sulfur or other vulcanizing agent and accelerator(s)), in a suitable device, for example an open mill. It is performed for an appropriate time (typically between 1 and 30 minutes, for example between 2 and 15 minutes) and at a sufficiently low temperature lower than the vulcanization temperature of the mixture, so as to protect against

premature vulcanization.

The rubber composition can be formed into useful articles, including treads for use on vehicle tires. The treads may be formed as tread bands and then later made a part of a tire or they be formed directly onto a tire carcass by, for example, extrusion and then cured in a mold.

The invention is further illustrated by the following examples, which are to be regarded only as illustrations. The properties of the compositions disclosed in the examples were evaluated as described below and these utilized methods are suitable for measurement of the claimed properties of the claimed invention.

Modulus of elongation (MPa) was measured at 10% (MA10) at a temperature of 23 °C based on ASTM Standard D412 on dumb bell test pieces. The measurements were taken in the second elongation; *i.e.,* after an accommodation cycle. These measurements are secant moduli in MPa, based on the original cross section of the test piece.

The elongation property was measured as elongation at break (%) and the corresponding elongation stress (MPa), which was measured at 23 °C in accordance with ASTM Standard D412 on ASTM C test pieces.

Mooney viscosity (ML 1+4) was measured in accordance with ASTM Standard D1646-04. In general, the composition in an uncured state is molded in a cylindrical enclosure and heated to 100 °C. After 1 minute of preheating, the rotor turns within the test sample at 2 rpm, and the torque used for maintaining this movement is measured after 4 minutes of rotation. The Mooney viscosity is expressed in "Mooney units" (MU, with 1 MU=0.83 Newton-meter).

Hysteresis losses (HL) were measured in percent by rebound at 60 °C at the sixth impact in accordance with the following equation:

$$HL(\%)=100(W_0\text{-}W_1)/W_1,$$

where $W_0$ is the energy supplied and $W_1$ is the energy restored.

Dynamic properties (Tg and G*) for the rubber compositions were measured on a Metravib Model VA400 ViscoAnalyzer Test System in accordance with ASTM D5992-96. The response of a sample of vulcanized material (double shear geometry with each of the two 10 mm diameter cylindrical samples being 2 mm thick) was recorded as it was being subjected to an alternating single sinusoidal shearing stress of a constant 0.7 MPa and at a frequency of 10 Hz over a temperature sweep from -80° C to 100° C with the temperature increasing at a rate of 1.5° C/min. The shear modulus G* was captured at 60° C and the temperature at which the max tan delta occurred was recorded as the glass transition temperature, Tg.

The mole percent of the epoxide functional group was determined by NMR characterization. First a 25 mg sample of the epoxidized elastomer is dissolved in 1 mL of deuterated chloroform ($CDCl_3$). The NMR analyses were performed on a 500MHz Bruker Spectrometer equipped with a 5mm Broad Band Cryoprobe. The sequence used was a quantitative 30 degrees $^1H$ simple impulsion with a recycle delay of 5 seconds. The spectral width was 12 ppm and the number of scans was 64. Calibration was carried out at 7.20 ppm on the $CHCl_3$ signal. Acquisition parameters were adjusted to obtain a full spectrum without FID truncation.

The $^1H$ NMR Spectrum shows the characteristic signal of the CH=CH of BR1-4 (δ=5.32 ppm) and the CH-CH of epoxidized BR1-4 (δ=2.86pm). A small signal at 2.63 ppm is also attributed to epoxidized BR. These attributions were confirmed by 2D NMR $^1H$-$^{13}C$ HSQC and HMBC.

The $^1H$ NMR spectrum makes it possible to quantify the functional group by integration of the signal characteristic of the protons of the epoxidized group situated in the vicinity of δ =2.86 ppm. The $^1H$ NMR technique was used to determine the microstructure of the elastomers obtained.

The molar ratio was estimated with the ratio of each pattern on the total according to the following calculation:

$$\%Epox = \frac{1H(Epox)}{1H(BR1-4)+1H(Epox)}.$$

Example **1**

Comparative rubber compositions using TESPT as the coupling agent without a quickly reactive silica were prepared using the components shown in Table **2.** The amount of each component making up the rubber compositions shown in Table **2** are provided in parts per hundred parts of rubber by weight (phr). The percent epoxidation of the rubber component is also shown in Table **2** as either 5 mol% or 12.5 mol%.

The silica was Sil160 from Rhodia. The C30 was NOVARES C30 (coumarone-indene resin; softening point: 20 to 30° C.) from Rutgers Chemicals. Dertophene H150 was a terpene phenolic resin from DRT having a softening point of 118 °C and hydroxyl value of between 156-170 and an Mn of 579 and an Ip of 1.18. The SYLVARES TP2040 was a terpene phenolic resin with a softening point of 125 °C, a Tg of 74 °C, a hydroxyl value of between 141-160, an

Mn of 608 and an Ip of 1.3.

The HTO was the sunflower oil AGRI-PURE 80 having a high oleic acid content of between 70 wt% and 80 wt%, available from Cargill.

Table **2** - Formulations and Properties

| **Formulations** | **W1** | **W2** | **W3** |
|---|---|---|---|
| eBR 5 mol% | 100 | | |
| eBR 12.5 mol% | | 100 | 100 |
| N234 | 6.56 | 8.56 | 8.56 |
| Sil160 | 104 | 100 | 100 |
| Si69 coupling agent | 8.32 | 8 | 8 |
| C30 | 22 | | |
| TP2040 | 51 | | 63 |
| Dertophene H150 | | 73 | |
| HTO | | | 10 |
| 6PPD | 2 | 1.9 | 1.9 |
| Wax | 1.5 | 1.5 | 1.5 |
| DPG | 1.7 | 1.7 | 1.7 |
| SAD | 2 | 2 | 2 |
| ZnO | 1.5 | 1.5 | 1.5 |
| CBS | 3.86 | 3.86 | 3.86 |
| S | 0.83 | 0.83 | 0.83 |
| **Physical Properties** | | | |
| Tg, °C | -19 | -8 | -22 |
| G* at 60 °C | 1.1 | 1.8 | 2.3 |

The rubber formulations were prepared by mixing the components given in Table **2,** except for the accelerators and sulfur, in a Banbury mixer until a temperature of between 110 °C and 190 °C was reached. The accelerators and sulfur were added in the second phase on a mill. Vulcanization was effected at 150 °C for 40 minutes. The formulations were then tested to measure their properties, the results of which are shown in Table **2.**

Example **2**

This example provides a procedure for making epoxidized BR. A solution of BR at 5wt% in toluene was prepared by dissolving 8.4 kg of BR in 175.3L of toluene. 809.8 g of formic acid (purity>98%) was added in the reactor under a sustained stirring. The reactor was then heated up to 50° C. After the temperature was reached, 2.12 L of $H_2O_2$ solution (solution at 35wt% in water) was added to the reaction mixture. The temperature was kept at 50° C during 4 hours at a stirring of 200 RPM.

At the end of the reaction, the temperature was decreased to 30° C. Then, formic acid was neutralized with a NaOH solution at 2.5M (1.01eq) to obtain a pH of around 10. The contact time for the neutralization was at least 30 minutes.

Antioxidants (4,4'-methylene-bis-2,6-tert-butylphénol / N-(1,3-dimethylbutyl)-N'-phenyl-p-phenylenediamine: 1/1) are were added to the epoxidized BR solution at a rate of 0.5g for 100g of elastomer. The contact time was at least 15 minutes. After, the epoxidized BR solution was stripped and dried.

The epoxide quantity, as obtained by NMR as described above, is 12.5 mol% +/-0.5 mol%. The yield of the chemical modification is 95 wt%. The macrostructure of the epoxidized BR is the following: Mn=232940 g/mol; Mw=533348 g/mol and Ip=2.29 as determined by SEC as described above.

Example **3**

This example demonstrates the improvements in the physical properties of rubber compositions that include the quickly reactive silica with the typical TESPT coupling agent over a rubber composition using a standard silica.

Rubber compositions were prepared using the components shown in Table **3.** The amount of each component making up the rubber compositions shown in Table **5** are provided in parts per hundred parts of rubber by weight (phr). The BR rubber used in the formulations as one having 5 mol% epoxidation. The silica used in the comparative example W**5** was Zeosil 1165 from Rhodia while the quickly reactive silica was ULTRASIL 7000 from Evonik.

The SYLVARES TP2040 was a terpene phenolic resin with a softening point of 125 °C, a Tg of 74 °C, a hydroxyl value of between 141-160, an Mn of 608 and an Ip of 1.3. The coupling agent was bis(3-hydroxydimethylsilyl)propyl tetrasulfide (TESPT).

The rubber formulations were prepared by mixing the components given in Table **3,** except for the accelerators and sulfur, in a Banbury mixer until a temperature of between 110 °C and 190 °C was reached. The accelerators and sulfur were added in the second phase on a mill. Vulcanization was effected at 150 °C for 40 minutes. The formulations were then tested to measure their properties, the results of which are shown in Table **3.**

Table **3** - Formulations and Properties

| **Formulations** | **W4** | **F3** | **W5** |
|---|---|---|---|
| eBR 5 mol% | 100 | 100 | |
| eBR 12.5 mol% | | | 100 |
| N234 | 6.56 | 6.56 | 6.56 |
| Sil160 | 104 | | 104 |
| ULTRASIL 7000 | | 104 | |
| Si69 coupling agent | 8.3 | 9.3 | |
| C30 | 10 | 4 | 20 |
| TP2019 | 68 | 65 | 64 |
| 6PPD | 2 | 2 | |
| Wax | 1.5 | 1.5 | 1.5 |
| DPG | 1.7 | 1.7 | 1.7 |
| SAD | 2 | 2 | 2 |
| ZnO | 1.5 | 1.5 | 1.5 |
| CBS | 3.9 | 3.9 | 3.9 |
| S | 0.8 | 0.8 | 0.8 |
| **Physical Properties** | | | |
| Tg, °C | -22 | -25 | -19 |
| G* at 60 °C | 1.0 | 1.2 | 1.1 |
| Elongation at Break. % | 350 | 660 | 170 |
| Stress at Break, MPa | 7 | 23 | 5 |
| Z-value | 62 | 77 | 45 |

As can be seen from the results provided in Table **3,** the cohesive properties were much improved as demonstrated by the remarkable increase in the stress and elongation at break that was achieved by the rubber composition having the quickly reactive silica.

The terms "comprising," "including," and "having," as used in the claims and specification herein, shall be considered as indicating an open group that may include other elements not specified. The term "consisting essentially of," as used in the claims and specification herein, shall be considered as indicating a partially open group that may include other elements not specified, so long as those other elements do not materially alter the basic and novel characteristics of the claimed invention. The terms "a," "an," and the singular forms of words shall be taken to include the plural form of the same words, such that the terms mean that one or more of something is provided. The terms "at least one" and "one or more" are used interchangeably. The term "one" or "single" shall be used to indicate that one and only one of something is intended. Similarly, other specific integer values, such as "two," are used when a specific number of things is intended. The terms "preferably," "preferred," "prefer," "optionally," "may," and similar terms are used to indicate that an item, condition or step being referred to is an optional (not required) feature of the invention. Ranges that are described as being "between a and b" are inclusive of the values for "a" and "b."

## Claims

1. A rubber composition that is based upon a cross-linkable elastomer composition, the cross-linkable elastomer composition comprising, per 100 parts by weight of rubber (phr):

   between 70 phr and 100 phr of an epoxidized rubber component selected from an epoxidized polybutadiene rubber (eBR), an epoxidized styrene-butadiene rubber (eSBR), or combinations thereof, wherein the epoxidized rubber component has a Tg of between -80 °C and -110 °C and an epoxy-function content of between 1 mol% and 25 mol%;
   between 30 phr and 150 phr of a plasticizing resin;
   a quickly reactive silica that provides a macro dispersion Z-value of at least 50 in a defined rubber composition; and
   a coupling agent corresponding to

   $$Z\text{-}A\text{-}S_x\text{-}A\text{-}Z$$

   wherein x is an integer between 2 and 8, A is a divalent hydrocarbon radical and Z corresponds to one of the following:

   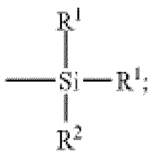 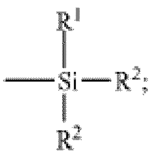 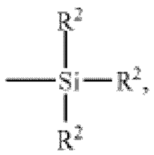

   wherein $R^1$ radicals are the same or different and are a $C_1$-$C_{18}$ alkyl, $C_5$-$C_{18}$ cycloalkyl or $C_6$-$C_{18}$ aryl group, $R^2$ radicals are the same or different and are $C_1$-$C_{18}$ alkoxyl or $C_5$-$C_{18}$ cycloalkoxyl group and wherein $R^2$ radicals are not a hydroxyl radical.

2. The rubber composition of claim 1, wherein the quickly reactive silica that provides a macro dispersion Z-value of at least 60.

3. The rubber composition of claim 2, wherein the quickly reactive silica that provides a macro dispersion Z-value of at least 65.

4. The rubber composition of any of the preceding claims, wherein the coupling agent is selected from bis-(triethoxysilylpropyl) tetrasulfide, bis-(triethoxysilylpropyl) disulfide or combinations thereof.

5. The rubber composition of any of the preceding claims, wherein the epoxidized rubber component is the eBR.

6. The rubber composition of any of the preceding claims, wherein the epoxidized rubber component is the eSBR.

7. The rubber composition of any of the preceding claims, wherein the quickly reactive silica has a BET surface area of between 140 $m^2$/g and 180 $m^2$/g as determined by ASTM 5604.

8. The rubber composition of any of the preceding claims, wherein the rubber composition comprises between 40 phr and 180 phr of the quickly reactive silica.

9. The rubber composition of any of the preceding claims, wherein the rubber composition includes less than 15 phr

of carbon black.

**10.** The rubber composition of any of the preceding claims, wherein the plasticizing resin is an efficient plasticizing resin such that when included in a mixture consisting of the epoxidized rubber component and 67 phr of the efficient plasticizing resin, causes a Tg of the mixture to be at least 14 °C higher than the Tg of the epoxidized rubber component.

**11.** The rubber composition of any of the preceding claims, wherein the plasticizing resin is a terpene phenolic resin.

**12.** The rubber composition of any of the preceding claims, wherein a Tg of the rubber composition is between 0 °C and -35 °C.

**13.** The rubber composition of any of the preceding claims, wherein the rubber composition further comprises between 0 phr and 30 phr of a highly unsaturated diene elastomer.

**14.** The rubber composition of claim 13, wherein the rubber composition further comprises between 5 phr and 30 phr of the highly unsaturated diene elastomer.

**15.** A tire tread, comprising the rubber composition of any of claims 1 through 14.

**Patentansprüche**

**1.** Kautschukzusammensetzung, die auf einer vernetzbaren Elastomerzusammensetzung basiert, wobei die vernetzbare Elastomerzusammensetzung pro 100 Gewichtsteile Kautschuk (phr) Folgendes umfasst:

zwischen 70 phr und 100 phr einer epoxidierten Kautschukkomponte, die aus einem epoxidierten Polybutadienkautschuk (eBR), einem epoxidierten StyrolButadien-Kautschuk (eSBR) oder Kombinationen davon ausgewählt ist, wobei die epoxidierte Kautschukkomponente einen Tg-Wert zwischen -80°C und -110°C und einen Epoxidgruppenanteil zwischen 1 Mol-% und 25 Mol-% besitzt;
zwischen 30 phr und 150 phr eines weichmachenden Harzes;
eine schnell reaktionsfähige Kieselsäure, die einen Z-Wert der Makrodispersion von mindestens 50 in einer definierten Kautschukzusammensetzung liefert; und
ein Kopplungsmittel entsprechend

$$Z\text{-}A\text{-}S_x\text{-}A\text{-}Z$$

worin x eine ganze Zahl zwischen 2 und 8 ist, A ein zweiwertiges Kohlenwasserstoff-Radikal ist und Z einer der folgenden Formeln entspricht:

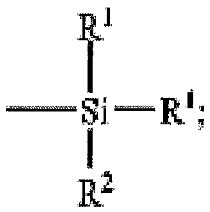 ; 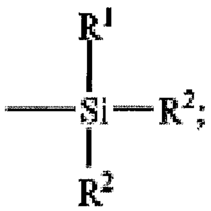 ; 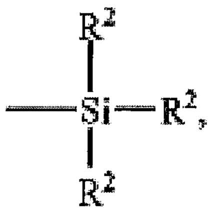 ,

worin die $R^1$-Radikale gleich oder verschieden sind und eine $C_1$-$C_8$-Alkyl-, $C_5$-$C_{18}$-Cycloalkyl- oder $C_6$-$C_{18}$-Arylgruppe darstellen, die $R^2$-Radikale gleich oder verschieden sind und eine $C_1$-$C_{18}$-Alkoxyl- oder $C_5$-$C_{18}$-Cycloalkoxylgruppe darstellen, und wobei die $R^2$-Radikale kein Hydroxyl-Radikal sind.

**2.** Kautschukzusammensetzung nach Anspruch 1, wobei die schnell reaktionsfähige Kieselsäure einen Z-Wert der Makrodispersion von mindestens 60 liefert.

**3.** Kautschukzusammensetzung nach Anspruch 2, wobei die schnell reaktionsfähige Kieselsäure einen Z-Wert der Makrodispersion von mindestens 65 liefert.

4. Kautschukzusammensetzung nach einem der vorhergehenden Ansprüche, wobei das Kopplungsmittel aus Bis-(triethoxysilylpropyl)tetrasulfid, Bis-(triethoxysilylpropyl)disulfid oder Kombinationen davon ausgewählt ist.

5. Kautschukzusammensetzung nach einem der vorhergehenden Ansprüche, wobei es sich bei der epoxidierten Kautschukkomponente um eBR handelt.

6. Kautschukzusammensetzung nach einem der vorhergehenden Ansprüche, wobei es sich bei der epoxidierten Kautschukkomponente um eSBR handelt.

7. Kautschukzusammensetzung nach einem der vorhergehenden Ansprüche, wobei die schnell reaktionsfähige Kieselsäure eine BET-Oberfläche zwischen 140 $m^2/g$ und 180 $m^2/g$ hat, ermittelt nach ASTM 5604.

8. Kautschukzusammensetzung nach einem der vorhergehenden Ansprüche, wobei die Kautschukzusammensetzung zwischen 40 phr und 180 phr der schnell reaktionsfähigen Kieselsäure umfasst.

9. Kautschukzusammensetzung nach einem der vorhergehenden Ansprüche, wobei die Kautschukzusammensetzung weniger als 15 phr Ruß enthält.

10. Kautschukzusammensetzung nach einem der vorhergehenden Ansprüche, wobei das weichmachende Harz ein effizientes weichmachendes Harz ist, so dass es, wenn es in einer Mischung aus der epoxidierten Kautschukkomponente und 67 phr des effizienten weichmachenden Harzes enthalten ist, bewirkt, dass ein Tg-Wert der Mischung mindestens 14°C höher ist als der Tg-Wert der epoxidierten Kautschukkomponente.

11. Kautschukzusammensetzung nach einem der vorhergehenden Ansprüche, wobei das weichmachende Harz ein Terpenphenolharz ist.

12. Kautschukzusammensetzung nach einem der vorhergehenden Ansprüche, wobei ein Tg-Wert der Kautschukzusammensetzung zwischen 0°C und -35°C liegt.

13. Kautschukzusammensetzung nach einem der vorhergehenden Ansprüche, wobei die Kautschukzusammensetzung ferner zwischen 0 phr und 30 phr eines hoch ungesättigten Dienelastomers umfasst.

14. Kautschukzusammensetzung nach Anspruch 13, wobei die Kautschukzusammensetzung ferner zwischen 5 phr und 30 phr des hoch ungesättigten Dienelastomers umfasst.

15. Reifenlauffläche, welche die Kautschukzusammensetzung nach einem der Ansprüche 1 bis 14 umfasst.

**Revendications**

1. Composition de caoutchouc à base d'une composition d'élastomère réticulable, la composition d'élastomère réticulable comprenant, pour 100 parties en poids de caoutchouc (pcc) :

   - un constituant caoutchouteux époxydé, choisi dans l'ensemble formé par un caoutchouc polybutadiène époxydé (eBR), un caoutchouc butadiène-styrène époxydé (eSBR) et une combinaison de tels caoutchoucs, en une proportion comprise dans l'intervalle allant de 70 pcc à 100 pcc, étant entendu que le constituant caoutchouteux époxydé présente une température de transition vitreuse Tg comprise dans l'intervalle allant de -80 °C à -110 °C et une teneur en fonctions époxyde comprise dans l'intervalle allant de 1 % en moles à 25 % en moles,
   - une résine plastifiante, en une proportion comprise dans l'intervalle allant de 30 pcc à 150 pcc,
   - de la silice à réaction rapide assurant une note Z de macro-dispersion d'au moins 50 dans une composition de caoutchouc déterminée,
   - et un agent de couplage symbolisé par la formule

   $$Z\text{-}A\text{-}S_x\text{-}A\text{-}Z,$$

   dans laquelle l'indice x est un nombre entier compris dans l'intervalle allant de 2 à 8, A représente un fragment hydrocarboné divalent et Z répond à l'une des formules suivantes :

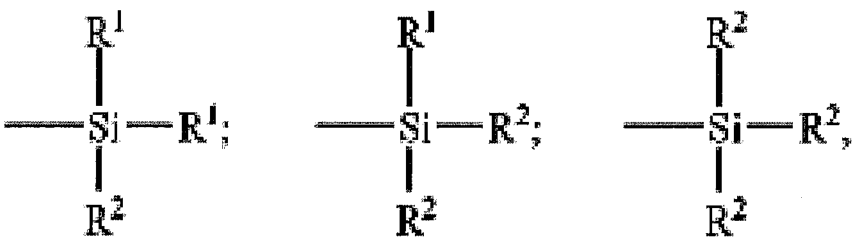

dans lesquelles les symboles $R^1$ représentent des entités identiques ou différentes et désignent des groupes alkyle en $C_1$-$C_{18}$, cycloalkyle en $C_5$-$C_{18}$ ou aryle en $C_6$-$C_{18}$, les symboles $R^2$ représentent des entités identiques ou différentes et désignent des groupes alcoxy en $C_1$-$C_{18}$ ou cycloalkyle en $C_5$-$C_{18}$, étant entendu que les symboles $R^2$ ne représentent pas un groupe hydroxyle.

**2.** Composition de caoutchouc conforme à la revendication 1, dans laquelle la silice à réaction rapide assure une note Z de macro-dispersion d'au moins 60.

**3.** Composition de caoutchouc conforme à la revendication 2, dans laquelle la silice à réaction rapide assure une note Z de macro-dispersion d'au moins 65.

**4.** Composition de caoutchouc conforme à n'importe laquelle des revendications précédentes, dans laquelle l'agent de couplage est choisi dans l'ensemble formé par du tétrasulfure de bis-(triéthoxy-silyl-propyle), du disulfure de bis-(triéthoxy-silyl-propyle) et des combinaisons de tels composés.

**5.** Composition de caoutchouc conforme à n'importe laquelle des revendications précédentes, dans laquelle le constituant caoutchouteux époxydé est du eBR.

**6.** Composition de caoutchouc conforme à n'importe laquelle des revendications précédentes, dans laquelle le constituant caoutchouteux époxydé est du eSBR.

**7.** Composition de caoutchouc conforme à n'importe laquelle des revendications précédentes, dans laquelle la silice à réaction rapide présente une surface spécifique BET, déterminée suivant la norme ASTM 5604, comprise dans l'intervalle allant de 140 $m^2/g$ à 180 $m^2/g$.

**8.** Composition de caoutchouc conforme à n'importe laquelle des revendications précédentes, dans laquelle la silice à réaction rapide se trouve an une proportion comprise dans l'intervalle allant de 40 pcc à 180 pcc.

**9.** Composition de caoutchouc conforme à n'importe laquelle des revendications précédentes, qui contient moins de 15 pcc de noir de carbone.

**10.** Composition de caoutchouc conforme à n'importe laquelle des revendications précédentes, dans laquelle la résine plastifiante est une résine plastifiante efficace qui, une fois combinée à raison de 67 pcc au constituant caoutchouteux époxydé, a pour effet de produire un mélange dont la température de transition vitreuse Tg est supérieure d'au moins 14 °C à la température de transition vitreuse Tg du constituant caoutchouteux époxydé.

**11.** Composition de caoutchouc conforme à n'importe laquelle des revendications précédentes, dans laquelle la résine plastifiante est une résine terpène-phénolique.

**12.** Composition de caoutchouc conforme à n'importe laquelle des revendications précédentes, dont la température de transition vitreuse Tg est comprise dans l'intervalle allant de 0 °C à -35 °C.

**13.** Composition de caoutchouc conforme à n'importe laquelle des revendications précédentes, qui contient en outre un élastomère du type diène à degré d'insaturation élevé, en une proportion comprise dans l'intervalle allant de 0 pcc à 30 pcc.

**14.** Composition de caoutchouc conforme à la revendication 13, dans laquelle l'élastomère du type diène à degré d'insaturation élevé se trouve en une proportion comprise dans l'intervalle allant de 5 pcc à 30 pcc.

**15.** Bande de roulement de pneumatique comprenant une composition de caoutchouc conforme à n'importe laquelle des revendications 1 à 14.

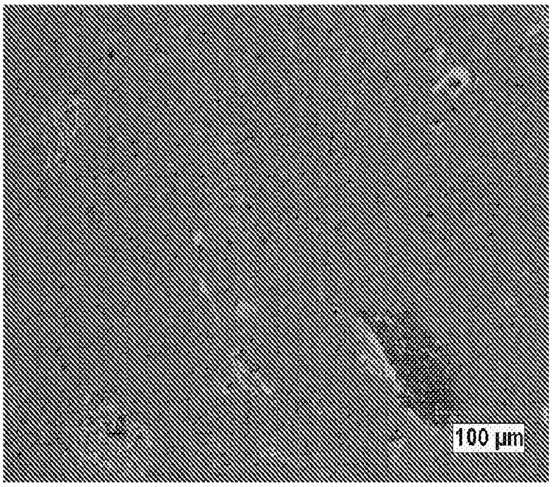


FIG. 1A

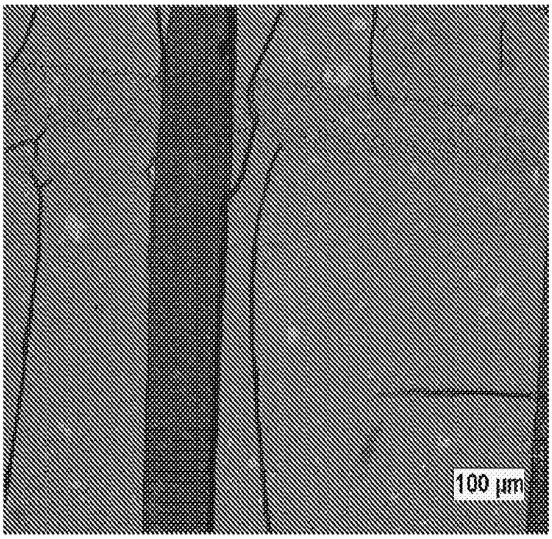


FIG. 1B

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 62096923 B
- US 7217751 B
- US 6774255 B


### Non-patent literature cited in the description


- **S. OTTO.** *Kautschuk Bummi Kunststoffe,* July 2005, vol. 58